# EUROPEAN PATENT SPECIFICATION

(11) **EP 2 976 873 B1**
(45) Date of publication and mention of the grant of the patent: **01.11.2017**
(21) Application number: 13878590.2
(22) Date of filing: 19.03.2013
(51) Int. Cl.: G06F 13/38, G06F 13/40

(54) **INTERCONNECT ASSEMBLY**
VERBINDUNGSANORDNUNG
ENSEMBLE INTERCONNEXION

(43) Date of publication of application: 27.01.2016
(73) Proprietor: Hewlett-Packard Development Company, L.P., Houston, Texas 77070 (US)
(72) Inventor: CASTELL, Robin, Houston, Texas 77070 (US); MANN, James, Houston, Texas 77070 (US)
(74) Representative: Zimmermann, Tankred Klaus
(86) International application number: PCT/US2013/032877
(87) International publication number: WO 2014/149032

(56) References cited:
- WO-A1-2007/102803
- JP-A- 2006 295 672
- KR-A- 20110 138 881
- KR-B1- 100 639 964
- KR-B1- 100 939 669
- US-A1- 2007 269 170
- US-A1- 2012 058 737
- US-A1- 2012 063 505
- US-B1- 6 337 754

## Description

### BACKGROUND

Consumers appreciate ease of use and reliability in their devices. They also appreciate aesthetically pleasing designs. Businesses may, therefore, endeavor to create and provide devices directed toward one or more of these objectives.

US 2012/058737 A1 describes a system that includes electronic equipment such as a computer or power adapter and that includes electronic devices such as cellular telephones, media players, and other devices, cables. The system may be provided with wireless transceiver circuitry. Each cable may include a power path without including data lines. When a user desires to power a device, the cable may be used to connect the device to the electronic equipment. The power path in the cable may deliver power from the electronic equipment to the electronic device. Data may be conveyed between the electronic equipment and the electronic device wirelessly, using the wireless transceiver circuitry in the cable. The cable may have first and second connectors at respective ends of the cable. The wireless transceiver circuitry may be contained within the first connector or within the first and second connectors. The wireless transceiver circuitry may be identified using an identifier.

US 2012/063505 A1 describes a power transmitter usable in a wireless power transmission system for transmitting power wirelessly. The power transmitter includes a power transmitting section for transmitting power; a communication section for communicating information, for controlling the transmission of the power, with the power receiver; and a control section for controlling the power transmitting section such that the power to be sent out by the power transmitting section is higher while the communication section is performing the communication.

### BRIEF DESCRIPTION OF THE DRAWINGS

The following detailed description references the drawings, wherein:
FIG. 1 is an example of an interconnect assembly.
FIG. 2 is an example of additional components or elements of the interconnect assembly of FIG. 1.
FIG. 3 is an example of a daisy chained interconnect assembly.
FIG. 4 is another example of a daisy chained interconnect assembly.
FIG. 5 is an example illustrating a type of connection for a second end of a cable of the interconnect assembly of FIG. 1.
FIG. 6 is an example illustrating another type of connection for the second end of the cable of the interconnect assembly of FIG. 1.
FIG. 7 is an example illustrating some of the various types of technologies that may be used by the wireless power coupler of the interconnect assembly of FIG. 1.
FIG. 8 is an example illustrating an attachment and alignment mechanism in use with the interconnect assembly of FIG. 1.

### DETAILED DESCRIPTION

Interconnect assemblies may include various mechanical components or elements, such as prongs, plugs, pins, or clips, which matingly engage a corresponding socket, aperture, opening or receptacle during connection. Examples of such interconnect assemblies include various cable assemblies (e.g., Universal Serial Bus, Video Graphics Array, High Definition Multimedia Interface, IEEE 1394, etc.) for use with devices, such as computers, tablets, mobile phones, televisions, and personal digital assistants.

The mechanical parts of these interconnect assemblies can be subject to damage and/or fatigue which can compromise the integrity of a connection. Additionally, dirt, debris, moisture, and other contaminants may collect on or enter such interconnect assemblies and their corresponding sockets, apertures, openings or receptacles which can render them, and/or any devices to which they are connected, inoperable. Furthermore, such interconnect assemblies and their corresponding sockets, apertures, openings and receptacles may detract from the aesthetics of a device for at least some consumers.

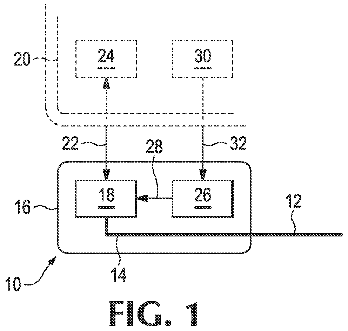

An example of an interconnect assembly 10 that is directed to addressing these challenges is illustrated in FIG. 1. As used herein, the term "cable" is defined as including, but is not necessarily limited to, either (i) one or more wires or cables that transceive data in the form of signals and that may be covered or bound together by a sleeve, insulation, conduit, tape, straps, etc. or (ii) a dongle.

As used herein, the term "dongle" is defined as including, but is not necessarily limited to, an apparatus that provides additional or enhanced functionality (e.g., additional memory, wireless connectivity, etc.) or an apparatus that facilitates the interface or connection between two different types of adapters, protocols, or power sources. Examples of dongles include, but are not limited to, flash memories, secure keys, and connection adapters. As used herein, the term "device" is defined as including, but is not necessarily limited to, a computer, tablet, mobile phone, television, personal digital assistant, monitor, display, audio component, peripheral, dock, sleeve, docking station, or appliance.

As used herein, the term "transceiver" is defined as including both transmission and reception of data in the form of one or more signals. As used herein, the terms "wireless" and "wirelessly" are defined as including, but are not necessarily limited to, a connection or coupling that does not require mechanical components or elements such as prongs, plugs, pins, or clips that matingly engage a corresponding socket, aperture, opening or receptacle. Wireless connections and couplings may operate in any of a variety of different frequency ranges and wavelengths. They may also be established electrically, magnetically, or optically.

Referring again to FIG. 1, interconnect assembly 10 includes a cable 12 having a first end 14 and a cable head 16 at first end 14 of cable 12. Interconnect assembly 10 also includes a wireless data transceiver 18 disposed in cable head 16 to wirelessly communicate data to and from device 20, as generally indicated by double-headed arrow 22 and wireless data transceiver 24 of device 20. As can be seen in FIG. 1, wireless data transceiver 18 is coupled to first end 14 of cable 12. Interconnect assembly 10 additionally includes a wireless power coupler 26 disposed in cable head 16 to wirelessly supply power from device 20 to wireless data transceiver 18, as generally indicated by arrow 28. As can also be seen in FIG. 1, device 20 includes a power supply 30 that wirelessly transmits power to wireless power coupler 26, as generally indicated by arrow 32.

In this example, cable head 16 provides a substantially fluid tight enclosure for wireless data transceiver 18 and wireless power coupler 26 to protect them from dirt, debris, moisture, etc. during use. Additionally, wireless data transceiver 18 and wireless power coupler 26 eliminate the issues, described above, associated with interconnect assemblies that utilize mechanical components.

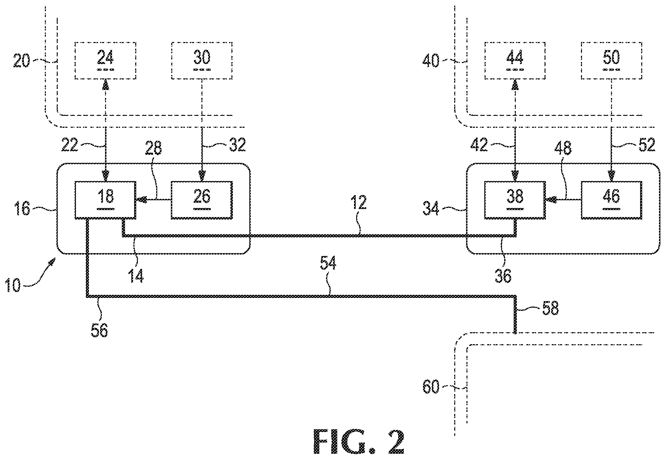

An example of additional components or elements of interconnect assembly 10 is shown in FIG. 2. As can be seen in FIG. 2, interconnect assembly 10 may also include a second cable head 34 at second end 36 of cable 12 and a second wireless data transceiver 38 disposed in second cable head 34 to wirelessly communicate data to and from second device 40, as generally indicated by double-headed arrow 42 and wireless data transceiver 44 of second device 40. In this example, second wireless data transceiver 38 is coupled to second end 36 of cable 12. Interconnect assembly 10 additionally includes a second wireless power coupler 46 disposed in second cable head 34 to wirelessly supply power from second device 40 to wireless data transceiver 38, as generally indicated by arrow 48. As can also be seen in FIG. 2, second device 40 includes a power supply 50 that wirelessly transmits power to second wireless power coupler 46, as generally indicated by arrow 52.

In this example, second cable head 34 provides a substantially fluid tight enclosure for second wireless data transceiver 38 and second wireless power coupler 46 to protect them from dirt, debris, moisture, etc. during use. Additionally, second wireless data transceiver 38 and second wireless power coupler 46 eliminate the issues, described above, associated with interconnect assemblies that utilize mechanical components.

As can additionally be seen in FIG. 2, interconnect assembly 10 may include a second cable 54 having a third end 56 that is coupled to wireless data transceiver 18. Second cable 54 also includes a fourth end 58 to couple to third device 60. Fourth end 58 may be coupled to a wireless data transceiver (not shown) of third device 60 or, for example, it may be directly connected to an input/output controller (also not shown) of third device 60.

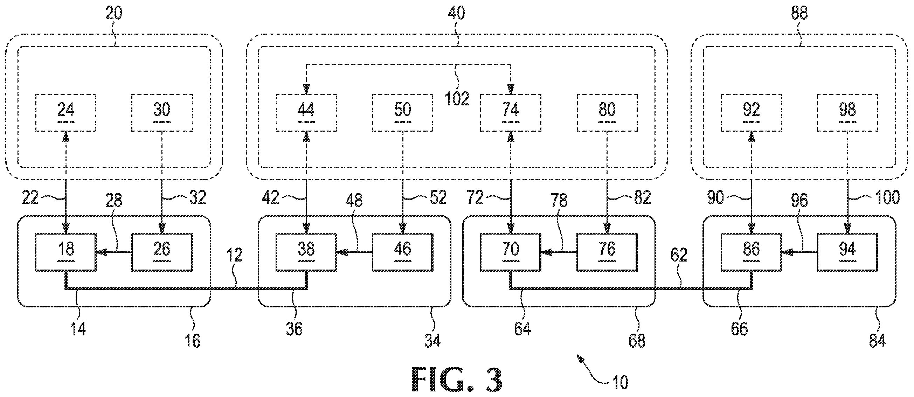

An example of daisy chaining interconnect assembly 10 is shown in FIG. 3. As can be seen in FIG. 3, in this example, interconnect assembly 10 includes a second cable 62 having a third end 64 and a fourth end 66, and a third cable head 68 at third end 64 of second cable 62. Interconnect assembly 10 also includes a third wireless data transceiver 70 disposed in third cable head 68 to wireless communicate data to and from second device 40, as generally indicated by double-headed arrow 72 and wireless data transceiver 74 of second device 40, and a third wireless power coupler 76 disposed in third cable head 68 to wirelessly supply power from second device 40 to third wireless data transceiver 70, as generally indicated by arrow 78. In this example, second device 40 includes a power supply 80 that wirelessly transmits power to third wireless power coupler 76, as generally indicated by arrow 82. It is to be understood, however, that in other examples, power supply 50 of second device 40 may be utilized to also wirelessly transmit power to third power coupler 76.

As can also be seen in FIG. 3, interconnect assembly 10 includes a fourth cable head 84 at fourth end 66 of second cable 62 and a fourth wireless data transceiver 86 disposed in fourth cable head 84 to wirelessly communicate data to and from third device 88, as generally indicated by double-headed arrow 90 and wireless data transceiver 92 of third device 88. Interconnect assembly 10 additionally includes a fourth wireless power coupler 94 disposed in fourth cable head 84 to wirelessly supply power from third device 88 to fourth wireless data transceiver 86, as generally indicated by arrow 96. As can additionally be seen in FIG. 3, device 88 includes a power supply 98 that wirelessly transmits power to fourth wireless power coupler 94, as generally indicated by arrow 100.

In this example, respective third and fourth cable heads 68 and 84 provide substantially fluid tight enclosures for third and fourth wireless data transceivers 70 and 86, as well as for third and fourth wireless power couplers 76 and 94 to protect them from dirt, debris, moisture, etc. during use. Additionally, third and fourth wireless data transceivers 70 and 86, as well as third and fourth wireless power couplers 76 and 94 eliminate the above-described issues associated with interconnect assemblies that utilize mechanical components.

As can further be seen in FIG. 3, this daisy chained arrangement of interconnect assembly 10 allows data to be wirelessly communicated between each of devices 20, 40, and 88. In the specific case of data communication between first device 20 and third device 88, wireless data transceivers 44 and 74 are coupled or connected together, as generally indicated by dashed double-headed arrow 102, to provide a path or bridge for this communication. Although not shown in FIG. 3, it is to be understood that any number of additional devices may wirelessly communicate using the illustrated daisy-chained interconnect assembly arrangement. Depending on the number of such additional devices, further cables, cable heads, wireless data transceivers, and/or wireless power couplers may be needed.

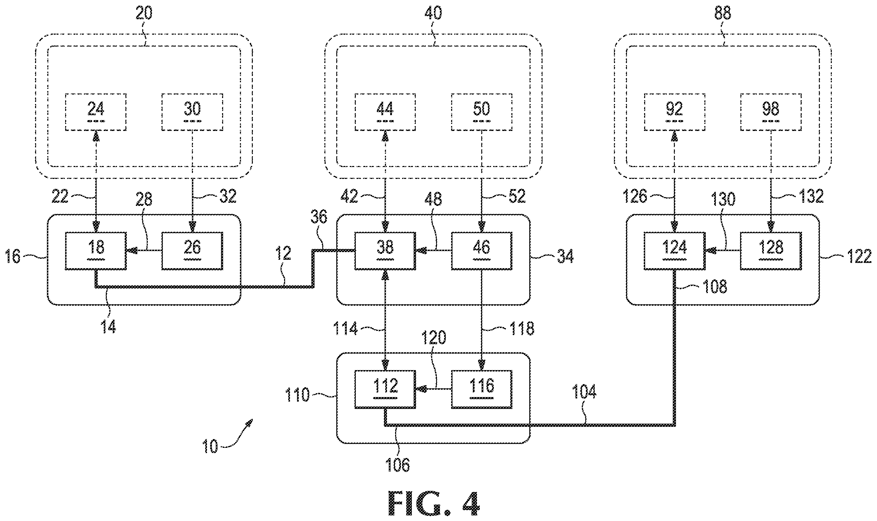

Another example of daisy chaining interconnect assembly 10 is shown in FIG. 4. As can be seen in FIG. 4, in this example, interconnect assembly 10 includes a second cable 104 having a third end 106 and a fourth end 108, and a third cable head 110 at third end 106 of second cable 104. Interconnect assembly 10 also includes a third wireless data transceiver 112 disposed in third cable head 110 to wirelessly communicate data to and from second wireless data transceiver 38, as generally indicated by double-headed arrow 114, and a third wireless power coupler 116 disposed in third cable head 110 to wirelessly supply power from second wireless power coupler 46, as generally indicated by arrow 118, to third wireless data transceiver 112, as generally indicated by arrow 120.

As can also be seen in FIG. 4, interconnect assembly 10 includes a fourth cable head 122 at fourth end 108 of second cable 104 and a fourth wireless data transceiver 124 disposed in fourth cable head 122 to wirelessly communicate data to and from third device 88, as generally indicated by double-headed arrow 126 and wireless data transceiver 92 of third device 88. Interconnect assembly 10 additionally includes a fourth wireless power coupler 128 disposed in fourth cable head 122 to wirelessly supply power from third device 88 to fourth wireless data transceiver 124, as generally indicated by arrow 130. As can additionally be seen in FIG. 4, device 88 includes a power supply 98 that wirelessly transmits power to fourth wireless power coupler 128, as generally indicated by arrow 132.

In this example, respective third and fourth cable heads 110 and 122 provide substantially fluid tight enclosures for third and fourth wireless data transceivers 112 and 124, as well as for third and fourth wireless power couplers 116 and 128 to protect them from dirt, debris, moisture, etc. during use. Additionally, third and fourth wireless data transceivers 112 and 124, as well as third and fourth wireless power couplers 116 and 128 eliminate the above-described issues associated with interconnect assemblies that utilize mechanical components.

As can further be seen in FIG. 4, this daisy chained arrangement of interconnect assembly 10 allows data to be wirelessly communicated between each of devices 20, 40, and 88. Although not shown in FIG. 4, it is to be understood that any number of additional devices may wirelessly communicate using the illustrated daisy-chained interconnect assembly arrangement. Depending on the number of such additional devices, further cables, cable heads, wireless data transceivers, and/or wireless power couplers may be needed.

In some examples, one or more of wireless data transceivers 18, 38, 70, 86, 112, and 124 of interconnect assembly 10 may operate in the extremely high frequency (EHF) range. In other examples, one or more of wireless data transceivers 18, 38, 70, 86, 112, and 124 of interconnect assembly 10 may operate substantially at sixty (60) gigahertz (GHz). In still other examples, one or more of wireless data transceivers 18, 38, 70, 86, 112, and 124 of interconnect assembly 10 may operate substantially in an infrared frequency range.

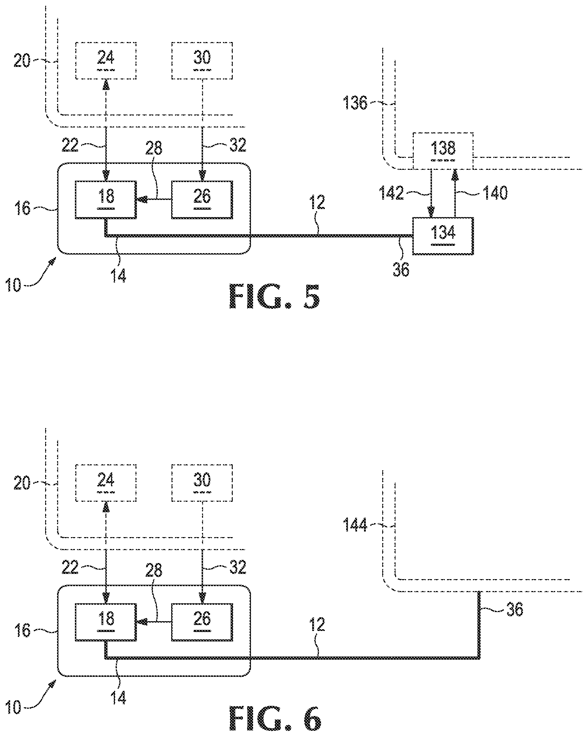

An example of a type of connection for second end 36 of cable 12 of interconnect assembly 10 is illustrated in FIG. 5. As can be seen in FIG. 5, interconnect assembly 10 further includes a connector 134 at second end 36 of cable 12 to couple to a second device 136. More specifically, connector 134 is designed to plug into a socket, aperture or opening 138, as generally indicated by arrow 140. Connector 134 is also designed to unplug from socket, aperture or opening 138 by moving it in a direction generally indicated by arrow 142. Connector 134 may include any type configuration or design depending on the type of technology being used (e.g., Universal Serial Bus, Video Graphics Array, High Definition Multimedia Interface, IEEE 1394, etc.).

Another example of a type of connection for second end 36 of cable 12 of interconnect assembly 10 is illustrated in FIG. 6. As can be seen in FIG. 6, in this example, second end 36 of cable 12 is hard wired to a second device 144. More specifically, second end 36 is permanently retained or attached to second device 144 and is not intended to be removed by an end-user of device 144. This type of connection may be established in a variety of different ways such as, for example, directly soldering second end 36 to an input/output controller of second device 144 or through the use of a connector at second end 36 of cable 12 that is held captive by second device 144.

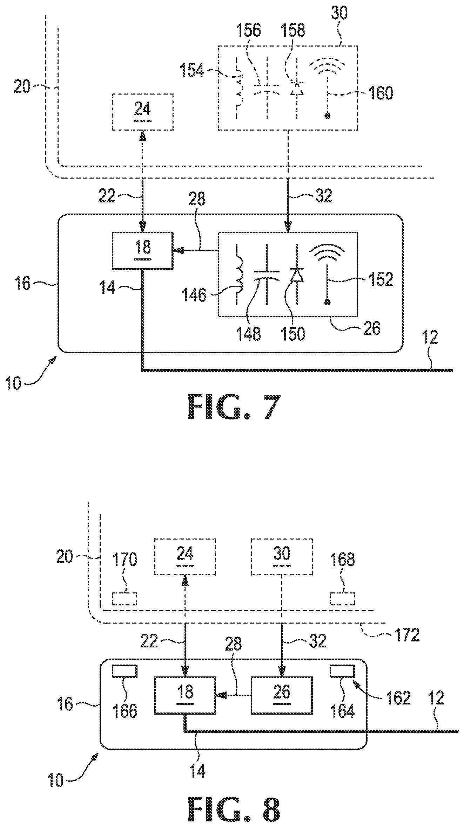

An example illustrating some of the various types of technologies that may be used by wireless power coupler 26 of interconnect assembly 10 is shown in FIG. 7. As can be seen in FIG. 7, wireless power coupler 26 may utilize inductive 146, capacitive 148, optical 150, and/or radio frequency (RF) 152 coupling to wirelessly supply power from device 20 to wireless data transceiver 18. As can also be seen in FIG. 7, power supply 30 of device 20 includes corresponding technology to wirelessly transmit power to wireless power coupler 26, as generally indicated by arrow 32 and inductor 154, capacitor 156, light emitting diode (LED) 158, and radio transceiver 160. Although not shown in FIG. 7, it is to be understood that one or more of wireless power couplers 46, 76, 94, 116, and 128 and corresponding power supply 50, 80, and 98 may also use any of these various technologies.

An example illustrating an attachment and alignment mechanism 162 in use with interconnect assembly 10 is shown in FIG. 8. Alignment and attachment mechanism 162 helps to facilitate connection of cable head 16 to device 20 as a result of the attraction between magnets 164 and 166 in cable head 16 and magnets 168 and 170 in device 20. Attachment and alignment mechanism 162 also facilitates wireless communication between wireless data transceiver 18 and wireless data transceiver 24 by helping to maintain their proper relative positions. Alignment and attachment mechanism 162 additionally facilitates wireless supply of power from device 20 to wireless power coupler 26 by helping to maintain proper relative positioning between power supply 30 and wireless power coupler 26.

Although a pair of magnets 164 and 166 in cable head 16 and a pair of magnets 168 and 170 in device 20 are shown in the example of attachment and alignment mechanism 162 of FIG. 8, it is to be understood that, in other examples, a different number may be used. For example, only one magnet in cable head 16 and one magnet in device 20. As another example, where cable head 16 is made from a magnetic material, only one or more magnets may be needed in device 20. As an additional example, where base 172 of device 20 is made from a magnetic material, only one or more magnets may be needed in cable head 16. Additionally, although not shown in FIG. 8, it is to be understood that one or more of cable heads 34, 68, 84, 110, and 122 and/or devices 40, 60, 88, 136, and 144 may also include an alignment and attachment mechanism.

Although several examples have been described and illustrated in detail, it is to be clearly understood that the same are intended by way of illustration and example only. These examples are not intended to be exhaustive or to limit the invention to the precise form or to the exemplary embodiments disclosed. Modifications and variations may well be apparent to those of ordinary skill in the art.

Additionally, reference to an element in the singular is not intended to mean one and only one, unless explicitly so stated, but rather means one or more. Moreover, no element or component is intended to be dedicated to the public regardless of whether the element or component is explicitly recited in the following claims.

## Claims

1. An interconnect assembly, comprising:
a cable (12) including a first end (14);
a cable head (16) at the first end (14) of the cable (12);
a wireless data transceiver (18) disposed in the cable head (16) to wirelessly communicate data to and from a device (20) located at the first end (14) of the cable (12); **characterised by** a wireless power coupler (26) disposed in the cable head (16) to wirelessly supply power from the device (20) to the wireless data transceiver (18).

2. The interconnect assembly of Claim 1, wherein the cable (12) includes a second end (36) and further comprising:
a second cable head (34) at the second end (36) of the cable (12);
a second wireless data transceiver (38) disposed in the second cable head (34) to wirelessly communicate data to and from a second device (40); and
a second wireless power coupler (46) disposed in the second cable head (34) to wirelessly supply power from the second device (40) to the second wireless data transceiver (38).

3. The interconnect assembly of Claim 2, further comprising a second cable (54) including a third end (56) coupled to the wireless data transceiver (18) and a fourth end (58) to couple to a third device (60).

4. The interconnect assembly of Claim 2, further comprising:
a second cable (62) including a third end (64) and a fourth end (66);
a third cable head (68) at the third end (64) of the second cable (62);
a third wireless data transceiver (70) disposed in the third cable head (68) to wirelessly communicate data to and from the second device (40);
a third wireless power coupler (76) disposed in the third cable head (68) to wirelessly supply power from the second device (40) to the third wireless data transceiver (70);
a fourth cable head (84) at the fourth end (66) of the second cable (62);
a fourth wireless data transceiver (86) disposed in the fourth cable head (84) to wirelessly communicate data to and from a third device (88); and
a fourth wireless power coupler (94) disposed in the fourth cable head (84) to wirelessly supply power from the third device (88) to the fourth wireless data transceiver (86).

5. The interconnect assembly of Claim 2, further comprising:
a second cable (104) including a third end (106) and a fourth end (108);
a third cable head (110) at the third end (106) of the second cable (104);
a third wireless data transceiver (112) disposed in the third cable head (110) to wirelessly communicate data to and from the second wireless data transceiver (38);
a third wireless power coupler (116) disposed in the third cable head (110) to wirelessly supply power from the second wireless power coupler (46) to the third wireless data transceiver (112);
a fourth cable head (122) at the fourth end (108) of the second cable (104);
a fourth wireless data transceiver (124) disposed in the fourth cable head (122) to wirelessly communicate data to and from a third device (88); and
a fourth wireless power coupler (128) disposed in the fourth cable head (122) to wirelessly supply power from the third device (88) to the fourth wireless data transceiver (124).

6. The interconnect assembly of Claim 1, wherein the wireless data transceiver (18) operates in an extremely high frequency (EHF) range.

7. The interconnect assembly of Claim 1, wherein the wireless data transceiver (18) operates substantially at sixty (60) gigahertz (GHz).

8. The interconnect assembly of Claim 1, wherein the wireless data transceiver (18) operates substantially in an infrared frequency range.

9. The interconnect assembly of Claim 1, wherein the cable (12) includes a second end (36) and further comprising a connector (134) at the second end (36) of the cable (12) to couple to a second device (136).

10. The interconnect assembly of Claim 1, wherein the cable (12) includes a second end (36), and further wherein the second end (36) is hard wired to a second device (144).

11. The interconnect assembly of Claim 1, wherein the wireless power coupler (26) utilizes at least one of inductive, capacitive, optical, and radio frequency coupling to wirelessly supply power from the device (20) to the wireless data transceiver (18).

12. The interconnect assembly of Claim 1, further comprising an attachment mechanism (162) to facilitate connection of the cable head (16) to the device (20).

13. The interconnect assembly of Claim 12, wherein the attachment mechanism (162) includes a magnet (164, 166, 168, 170) in at least one of the cable head (16) and the device (20).

14. The interconnect assembly of Claim 1, further comprising an alignment mechanism (162) to facilitate at least one of wireless communication of data to and from the device (20) and wireless supply of power from the device (20) to the wireless power coupler (26).

15. The interconnect assembly of Claim 14, wherein the alignment mechanism (162) includes a magnet (164, 166, 168, 170) in at least one of the cable head (16) and the device (20).

## Patentansprüche

1. Verbindungsanordnung, Folgendes umfassend:
ein Kabel (12) mit einem ersten Ende (14);
einen Kabelkopf (16) am ersten Ende (14) des Kabels (12);
einen drahtlosen Daten-Sende-Empfänger (18), der im Kabelkopf (16) angeordnet ist, um Daten drahtlos an eine sich am ersten Ende (14) des Kabels (12) befindliche Vorrichtung (20) und von dieser zu kommunizieren;
**gekennzeichnet durch**
einen drahtlosen Leistungskoppler (26), der im Kabelkopf (16) angeordnet ist, um drahtlos Leistung von der Vorrichtung (20) an den drahtlosen Daten-Sende-Empfänger (18) zu liefern.

2. Verbindungsanordnung nach Anspruch 1, wobei das Kabel (12) ein zweites Ende (36) enthält und ferner Folgendes umfasst:
einen zweiten Kabelkopf (34) am zweiten Ende (36) des Kabels (12);
einen zweiten drahtlosen Daten-Sende-Empfänger (38), der im zweiten Kabelkopf (34) angeordnet ist, um Daten drahtlos an eine zweite Vorrichtung (40) und von dieser zu kommunizieren; und
einen zweiten drahtlosen Leistungskoppler (46), der im zweiten Kabelkopf (34) angeordnet ist, um drahtlos Leistung von der zweiten Vorrichtung (40) an den zweiten drahtlosen Daten-Sende-Empfänger (38) zu liefern.

3. Verbindungsanordnung nach Anspruch 2, ferner umfassend ein zweites Kabel (54) mit einem dritten Ende (56), das an den drahtlosen Daten-Sende-Empfänger (18) gekoppelt ist, und einem vierten Ende (58) zum Koppeln mit einer dritten Vorrichtung (60).

4. Verbindungsanordnung nach Anspruch 2, ferner Folgendes umfassend:
ein zweites Kabel (62) mit einem dritten Ende (64) und einem vierten Ende (66);
einen dritten Kabelkopf (68) am dritten Ende (64) des zweiten Kabels (62);
einen dritten drahtlosen Daten-Sende-Empfänger (70), der im dritten Kabelkopf (68) angeordnet ist, um drahtlos Daten an die zweite Vorrichtung (40) und von dieser zu kommunizieren;
einen dritten drahtlosen Leistungskoppler (76), der im dritten Kabelkopf (68) angeordnet ist, um drahtlos Leistung von der zweiten Vorrichtung (40) an den dritten drahtlosen Daten-Sende-Empfänger (70) zu liefern;
einen vierten Kabelkopf (84) am vierten Ende (66) des zweiten Kabels (62);
einen vierten drahtlosen Daten-Sende-Empfänger (86), der im vierten Kabelkopf (84) angeordnet ist, um Daten drahtlos an eine dritte Vorrichtung (88) und von dieser zu kommunizieren; und
einen vierten drahtlosen Leistungskoppler (94), der im vierten Kabelkopf (84) angeordnet ist, um drahtlos Leistung von der dritten Vorrichtung (88) an den vierten drahtlosen Daten-Sende-Empfänger (86) zu liefern.

5. Verbindungsanordnung nach Anspruch 2, ferner Folgendes umfassend:
ein zweites Kabel (104) mit einem dritten Ende (106) und einem vierten Ende (108);
einen dritten Kabelkopf (110) am dritten Ende (106) des zweiten Kabels (104);
einen dritten drahtlosen Daten-Sende-Empfänger (112), der im dritten Kabelkopf (110) angeordnet ist, um drahtlos Daten an den zweiten drahtlosen Daten-Sende-Empfänger (38) und von diesem zu kommunizieren;
einen dritten drahtlosen Leistungskoppler (116), der im dritten Kabelkopf (110) angeordnet ist, um drahtlos Leistung von dem zweiten drahtlosen Leistungskoppler (46) an den dritten drahtlosen Daten-Sende-Empfänger (112) zu liefern;
einen vierten Kabelkopf (122) am vierten Ende (108) des zweiten Kabels (104);
einen vierten drahtlosen Daten-Sende-Empfänger (124), der im vierten Kabelkopf (122) angeordnet ist, um Daten drahtlos an eine dritte Vorrichtung (88) und von dieser zu kommunizieren; und
einen vierten drahtlosen Leistungskoppler (128), der im vierten Kabelkopf (122) angeordnet ist, um drahtlos Leistung von der dritten Vorrichtung (88) an den vierten drahtlosen Daten-Sende-Empfänger (124) zu liefern.

6. Verbindungsanordnung nach Anspruch 1, wobei der drahtlose Daten-Sende-Empfänger (18) in einem Millimeterwellen(extremely *high frequency -* EHF)-Bereich betrieben wird.

7. Verbindungsanordnung nach Anspruch 1, wobei der drahtlose Daten-Sende-Empfänger (18) im Wesentlichen bei sechzig (60) Gigahertz (GHz) betrieben wird.

8. Verbindungsanordnung nach Anspruch 1, wobei der drahtlose Daten-Sende-Empfänger (18) im Wesentlichen in einem Infrarotfrequenzbereich betrieben wird.

9. Verbindungsanordnung nach Anspruch 1, wobei das Kabel (12) ein zweites Ende (36) enthält und ferner einen Verbinder (134) am zweiten Ende (36) des Kabels (12) umfasst, um mit einer zweiten Vorrichtung (136) gekoppelt zu werden.

10. Verbindungsanordnung nach Anspruch 1, wobei das Kabel (12) ein zweites Ende (36) enthält und ferner wobei das zweite Ende (36) mit einer zweiten Vorrichtung (144) fest verdrahtet ist.

11. Verbindungsanordnung nach Anspruch 1, wobei der drahtlose Leistungskoppler (26) eine induktive, kapazitive, optische und/oder Funkfrequenzkopplung verwendet, um drahtlos Leistung von der Vorrichtung (20) an den drahtlosen Daten-Sende-Empfänger (18) zu liefern.

12. Verbindungsanordnung nach Anspruch 1, ferner umfassend einen Befestigungsmechanismus (162), um eine Verbindung des Kabelkopfs (16) mit der Vorrichtung (20) zu ermöglichen.

13. Verbindungsanordnung nach Anspruch 12, wobei der Befestigungsmechanismus (162) einen Magneten (164, 166, 168, 170) in dem Kabelkopf (16) und/oder der Vorrichtung (20) enthält.

14. Verbindungsanordnung nach Anspruch 1, ferner umfassend einen Ausrichtungsmechanismus (162) zum Ermöglichen einer drahtlosen Kommunikation von Daten an die und von der Vorrichtung (20) und/oder einer drahtlosen Lieferung von Leistung von der Vorrichtung (20) an den drahtlosen Leistungskoppler (26).

15. Verbindungsanordnung nach Anspruch 14, wobei der Ausrichtungsmechanismus (162) einen Magneten (164, 166, 168, 170) in dem Kabelkopf (16) und/oder der Vorrichtung (20) enthält.

## Revendications

1. Ensemble d'interconnexion, comprenant :
un câble (12) comportant une première extrémité (14) ;
une tête de câble (16) au niveau de la première extrémité (14) du câble (12) ;
un émetteur-récepteur de données sans fil (18) disposé dans la tête de câble (16) pour communiquer sans fil des données vers et depuis un dispositif (20) situé au niveau de la première extrémité (14) du câble (12) ;
**caractérisé par**
un coupleur de puissance sans fil (26) disposé dans la tête de câble (16) pour fournir de l'énergie sans fil du dispositif (20) à l'émetteur-récepteur de données sans fil (18).

2. Ensemble d'interconnexion selon la revendication 1, dans lequel le câble (12) comporte une deuxième extrémité (36) et comprenant en outre :
une deuxième tête de câble (34) au niveau de la deuxième extrémité (36) du câble (12) ;
un deuxième émetteur-récepteur de données sans fil (38) disposé dans la deuxième tête de câble (34) pour communiquer sans fil des données vers et depuis un deuxième dispositif (40) ; et
un deuxième coupleur de puissance sans fil (46) disposé dans la deuxième tête de câble (34) pour fournir de l'énergie sans fil du deuxième dispositif (40) au deuxième émetteur-récepteur de données sans fil (38).

3. Ensemble d'interconnexion selon la revendication 2, comprenant en outre un second câble (54) comprenant une troisième extrémité (56) couplée à l'émetteur-récepteur de données sans fil (18) et une quatrième extrémité (58) à coupler à un troisième dispositif (60).

4. Ensemble d'interconnexion selon la revendication 2, comprenant en outre :
un second câble (62) comportant une troisième extrémité (64) et une quatrième extrémité (66) ;
une troisième tête de câble (68) au niveau de la troisième extrémité (64) du second câble (62) ;
un troisième émetteur-récepteur de données sans fil (70) disposé dans la troisième tête de câble (68) pour communiquer sans fil des données vers et depuis le deuxième dispositif (40) ;
un troisième coupleur de puissance sans fil (76) disposé dans la troisième tête de câble (68) pour fournir de l'énergie sans fil du deuxième dispositif (40) au troisième émetteur-récepteur de données sans fil (70) ;
une quatrième tête de câble (84) au niveau de la quatrième extrémité (66) du second câble (62) ;
un quatrième émetteur-récepteur de données sans fil (86) disposé dans la quatrième tête de câble (84) pour communiquer sans fil des données vers et depuis un troisième dispositif (88) ; et
un quatrième coupleur de puissance sans fil (94) disposé dans la quatrième tête de câble (84) pour fournir de l'énergie sans fil du troisième dispositif (88) au quatrième émetteur-récepteur de données sans fil (86).

5. Ensemble d'interconnexion selon la revendication 2, comprenant en outre :
un second câble (104) comportant une troisième extrémité (106) et une quatrième extrémité (108) ;
une troisième tête de câble (110) au niveau de la troisième extrémité (106) du second câble (104) ;
un troisième émetteur-récepteur de données sans fil (112) disposé dans la troisième tête de câble (110) pour communiquer sans fil des données vers et depuis le deuxième émetteur-récepteur de données sans fil (38) ;
un troisième coupleur de puissance sans fil (116) disposé dans la troisième tête de câble (110) pour fournir de l'énergie sans fil du deuxième coupleur de puissance sans fil (46) au troisième émetteur-récepteur de données sans fil (112) ;
une quatrième tête de câble (122) au niveau de la quatrième extrémité (108) du second câble (104) ;
un quatrième émetteur-récepteur de données sans fil (124) disposé dans la quatrième tête de câble (122) pour communiquer sans fil des données vers et depuis un troisième dispositif (88) ; et
un quatrième coupleur de puissance sans fil (128) disposé dans la quatrième tête de câble (122) pour fournir de l'énergie sans fil du troisième dispositif (88) au quatrième émetteur-récepteur de données sans fil (124).

6. Ensemble d'interconnexion selon la revendication 1, dans lequel l'émetteur-récepteur de données sans fil (18) fonctionne dans une plage de fréquence extrêmement élevée (EHF).

7. Ensemble d'interconnexion selon la revendication 1, dans lequel l'émetteur-récepteur de données sans fil (18) fonctionne sensiblement à soixante (60) gigahertz (GHz).

8. Ensemble d'interconnexion selon la revendication 1, dans lequel l'émetteur-récepteur de données sans fil (18) fonctionne sensiblement dans une plage de fréquence infrarouge.

9. Ensemble d'interconnexion selon la revendication 1, dans lequel le câble (12) comporte une deuxième extrémité (36) et comprenant en outre un connecteur (134) au niveau de la deuxième extrémité (36) du câble (12) à coupler à un deuxième dispositif (136).

10. Ensemble d'interconnexion selon la revendication 1, dans lequel le câble (12) comporte une deuxième extrémité (36), et en outre dans lequel la deuxième extrémité (36) est câblée à un deuxième dispositif (144).

11. Ensemble d'interconnexion selon la revendication 1, dans lequel le coupleur de puissance sans fil (26) utilise au moins l'un d'un couplage de fréquence inductif, capacitif, optique, et radio pour fournir de l'énergie sans fil du dispositif (20) à l'émetteur-récepteur de données sans fil (18).

12. Ensemble d'interconnexion selon la revendication 1, comprenant en outre un mécanisme de fixation (162) pour faciliter la connexion de la tête de câble (16) au dispositif (20).

13. Ensemble d'interconnexion selon la revendication 12, dans lequel le mécanisme de fixation (162) comporte un aimant (164, 166, 168, 170) dans au moins l'un de la tête de câble (16) et du dispositif (20).

14. Ensemble d'interconnexion selon la revendication 1, comprenant en outre un mécanisme d'alignement (162) pour faciliter au moins l'une d'une communication sans fil de données vers et depuis le dispositif (20) et d'une fourniture d'énergie sans fil du dispositif (20) au coupleur de puissance sans fil (26).

15. Ensemble d'interconnexion selon à revendication 14, dans lequel le mécanisme d'alignement (162) comporte un aimant (164, 166, 168, 170) dans au moins l'un de la tête de câble (16) et du dispositif (20).
